Europäisches Patentamt

European Patent Office

Office européen des brevets

(19)

(11) EP 0 881 555 A1

(12) **DEMANDE DE BREVET EUROPEEN**

(43) Date de publication:
02.12.1998 Bulletin 1998/49

(51) Int Cl.⁶: **G05D 21/02, A01K 63/04**

(21) Numéro de dépôt: 98400988.6

(22) Date de dépôt: 23.04.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 29.05.1997 FR 9706606

(71) Demandeur: L'AIR LIQUIDE, SOCIETE ANONYME
POUR
L'ETUDE ET L'EXPLOITATION DES PROCEDES
GEORGES CLAUDE
75321 Paris Cédex 07 (FR)

(72) Inventeur: Sevic, Bohumil
29800 St-Urbin (FR)

(74) Mandataire: Mellul, Sylvie Lisette et al
L'Air Liquide,
Service Propriété Industrielle,
75, Quai d'Orsay
75321 Paris Cedex 07 (FR)

(54) **Procédé de régulation de la teneur d'oxygène de l'eau en sortie d'un appareil de dissolution d'oxygène dans l'eau et appareil pour la mise en oeuvre de procédé**

(57) L'invention concerne un procédé de régulation de la teneur en oxygène de l'eau en sortie d'un appareil de dissolution d'oxygène dans l'eau, dans lequel on mesure au moyen d'un capteur la teneur $C_s$ en oxygène de l'eau en sortie de l'appareil et on compare la teneur $C_s$ mesurée en sortie de l'appareil à une valeur de consigne $C_{consig}$. Si la teneur $C_s$ mesurée est inférieure la valeur de consigne $C_{consig}$, on déclenche un cycle d'alimentation en oxygène dudit appareil, un cycle d'alimentation étant composé d'une période $T_i$ d'injection de l'oxygène dans l'appareil pendant laquelle une vanne de régulation du débit d'oxygène alimentant l'appareil est en position ouverte, et d'une période $T_p$ d'inhibition pendant laquelle ladite vanne est en position fermée.

Application aux appareils de dissolution d'oxygène dans l'eau destinés notamment à la pisciculture.

FIG.2

EP 0 881 555 A1

**Description**

L'invention est relative à un procédé de régulation de la teneur en oxygène de l'eau en sortie d'un appareil de dissolution d'oxygène dans l'eau, destiné notamment à la pisciculture.

En pisciculture, il est courant d'alimenter des bassins d'élevage de poissons avec de l'eau dont la teneur en oxygène a été augmentée au moyen d'un appareil de dissolution d'oxygène dans l'eau pour assurer la respiration des poissons vivant dans ces bassins d'élevage. Cette teneur doit être adaptée tout au long d'une journée à la consommation d'oxygène des poissons dans les bassins.

On connaît des appareils de dissolution de l'oxygène dans l'eau qui comprennent des unités mettant en oeuvre des procédés complexes de régulation de la teneur en oxygène de l'eau en sortie d'un tel appareil. Ces procédés sont par exemple du type « P.I.D. », c'est-à-dire une régulation par action proportionnelle, intégrale et dérivée, ou des procédés de régulation proportionnelle nécessitant des systèmes compliqués de régulation comprenant un nombre important d'électrovannes.

L'invention vise à proposer un procédé de régulation de la teneur en oxygène de l'eau en sortie d'un appareil de dissolution d'oxygène dans l'eau qui soit plus simple que ceux décrits ci-dessus.

A cet effet, l'invention a pour objet un procédé de régulation de la teneur en oxygène de l'eau en sortie d'un appareil de dissolution d'oxygène dans l'eau, destiné notamment à la pisciculture, dans lequel

- on mesure au moyen d'un capteur la teneur $C_s$ en oxygène de l'eau en sortie de l'appareil, et
- on compare la teneur $C_s$ mesurée en sortie de l'appareil à une valeur de consigne $C_{consig.}$,

caractérisé en ce que

si la teneur $C_s$ mesurée est inférieure la valeur de consigne $C_{consig.}$, on déclenche un cycle d'alimentation en oxygène dudit appareil, un cycle d'alimentation étant composé d'une période $T_i$ d'injection de l'oxygène dans l'appareil pendant laquelle une vanne de régulation du débit d'oxygène alimentant ledit appareil est en position ouverte, et d'une période $T_p$ d'inhibition pendant laquelle ladite vanne est en position fermée, ladite période d'inhibition correspondant sensiblement à l'inertie de réponse de l'appareil à une injection d'oxygène.

Le procédé selon l'invention peut de plus comporter une ou plusieurs des caractéristiques suivantes :

- le rapport entre la durée de la période $T_i$ d'injection et la durée de la période $T_p$ d'inhibition est sensiblement constant,
- pour un appareil de dissolution d'oxygène contenant un volume d'eau $V_e$, la période $T_p$ d'inhibition est sensiblement définie par la relation :

$$T_p = \frac{V_e}{Q_{H_2O}} .$$

- on mesure également la teneur $C_e$ d'oxygène de l'eau à l'entrée de l'appareil, et en ce que la durée totale $T_{tot}$ d'un cycle d'alimentation est sensiblement définie par la relation suivante :

$$T_{tot} = \frac{(C_{consig.} - C_s)V_g Rd_m}{Q_{H_2O}(C_s - C_e)E}$$

où $V_g$ est le volume de la phase gazeuse contenue dans l'appareil, $Rd_m$ est le rendement réel de dissolution de l'appareil et E est le coefficient théorique de rendement de dissolution de l'oxygène,

- lors de la période $T_i$, on injecte de l'oxygène avec un débit $Q_i$ défini sensiblement par la relation suivante:

$$Q_i = \frac{Q_{H_2O} V_g (C_s - C_e)(C_{consig.} - C_s)}{Rd_m V_g (C_{consig.} - C_s) - V_e E(C_s - C_e)}$$

L'invention a en outre pour objet un appareil de dissolution d'oxygène dans l'eau comprenant une cuve d'oxygénation reliée à une source d'oxygène par l'intermédiaire d'une canalisation d'alimentation, caractérisé en ce qu'il comprend une électrovanne tout ou rien pouvant prendre soit une position fermée, soit une position ouverte, qui est disposée dans la canalisation d'alimentation, un capteur de mesure de la teneur $C_e$ en oxygène de l'eau à traiter ainsi qu'un capteur de mesure de la teneur $C_s$ d'oxygène dissous dans l'eau en sortie de l'appareil, et une unité centrale comprenant des moyens d'exploitation des signaux délivrés par les deux capteurs de mesure ainsi que des moyens de commande de l'électrovanne pilotés par les moyens d'exploitation.

L'appareil selon l'invention peut de plus comporter une ou plusieurs des caractéristiques suivantes :

- les moyens d'exploitation comprennent des moyens de comparaison de la teneur $C_s$ avec la valeur de consigne $C_{consig.}$ mémorisée dans une mémoire et des moyens de calcul de la durée de la période $T_i$ d'injection,
- les moyens de commande de l'électrovanne comprennent une mémoire de la durée de la période d'inhibition $T_p$ et, reliée à cette mémoire ainsi qu'aux moyens de calcul, un temporisateur pour commander les temps d'ouverture et de fermeture de l'électrovanne.

D'autres caractéristiques et avantages de l'invention ressortiront de la description suivante, donnée à titre d'exemple, sans caractère limitatif, en regard des dessins annexés sur lesquels :

La figure 1 est un schéma synoptique d'un appareil de dissolution d'oxygène dans l'eau,

La figure 2 est un graphique montrant, en fonction du temps, la teneur en oxygène de l'eau en sortie d'un appareil de dissolution et illustrant le procédé de régulation selon l'invention, et

La figure 3 représente un graphique montrant des courbes d'étalonnage d'un appareil de dissolution d'oxygène dans l'eau.

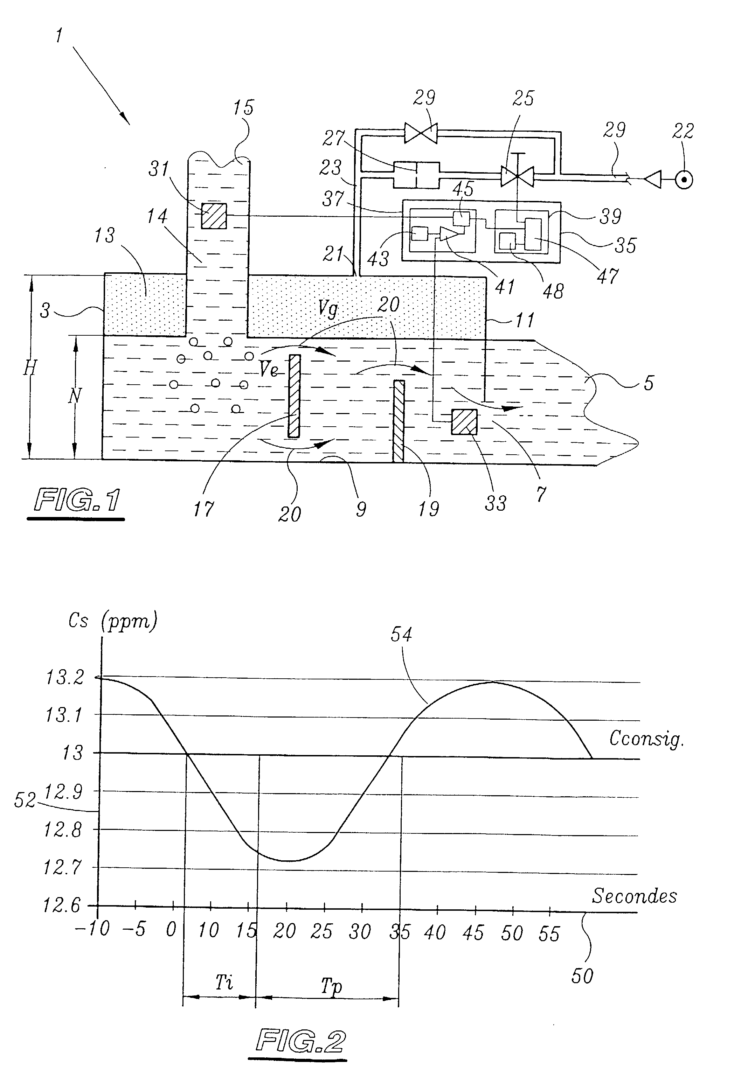

Sur la figure 1 est représenté un appareil 1 de dissolution d'oxygène dans l'eau destiné à la pisciculture.

Cet appareil 1 comprend une cuve 3 d'oxygénation d'eau qui enferme un volume total $V_{tot}$ de traitement. Cette cuve 3 est en communication avec un bassin 5 d'élevage de poissons par une ouverture de sortie 7 ménagée proche du fond 9 de la cuve 3 dans une paroi latérale 11 de celle-ci. Du fait que la cuve 3 et le bassin 4 communiquent par l'ouverture 7, le niveau d'eau N dans la cuve 3 correspond à celui du bassin 5 d'élevage. Le niveau d'eau du bassin 5 est maintenue constant de sorte que le niveau N dans la cuve 3 est aussi constant lors du fonctionnement de l'appareil 1.

La hauteur H de la cuve 3 est supérieure au niveau d'eau N de sorte que le volume total $V_{tot}$ est divisé en un volume supérieur $V_g$ contenant une phase gazeuse à forte proportion d'oxygène destiné à être dissous dans l'eau et un volume $V_e$ contenant de l'eau en traitement. Comme le niveau d'eau N dans la cuve 3 est constant lors du fonctionnement de l'appareil 1, les volumes $V_g$ et $V_e$ sont également constants.

A travers une ouverture 14 prévue dans sa paroi supérieure 13, la cuve 3 est reliée à une canalisation 15 d'alimentation en eau à traiter. Comme un appareil de dissolution d'oxygène dans l'eau est conçu pour un débit nominal d'eau à traiter, le débit d'eau à traiter $Q_{H2O}$ venant de la canalisation 15 est sensiblement constant.

En fonctionnement, l'eau en sortie de la canalisation 15 traverse la phase gazeuse et se verse dans la phase liquide afin de créer une émulsion avec des bulles de gaz pour dissoudre l'oxygène de la phase gazeuse dans l'eau contenue dans la cuve 3. Grâce à l'émulsion avec les bulles de gaz, le transfert gaz-liquide est augmenté de façon significative.

Il est à noter qu'à part de l'oxygène, la phase gazeuse contient aussi d'autres gaz comme par exemple de l'azote ou de l'argon. Ces autres gaz proviennent surtout de l'eau à traiter, qui contient déjà une certaine quantité de gaz dissous. Ces autres gaz se libèrent en partie dans l'émulsion et modifient la composition de la phase gazeuse.

Pour récupérer les bulles de gaz excédentaires non dissoutes dans l'eau, des parois 17 et 19 de déviation de l'écoulement de l'eau sont disposées dans la cuve 3. L'écoulement dévié de l'eau est indiqué par des flèches 20.

A travers une ouverture 21 prévue dans sa paroi supérieure 13, la cuve 3 est en outre reliée à une source

22 d'oxygène par l'intermédiaire d'une canalisation 23 d'alimentation de l'appareil 1 en oxygène. Dans cette canalisation 23 sont disposés en ligne une électrovanne 25 dite « tout ou rien », c'est à dire une électrovanne qui prend soit une position fermée, soit une position ouverte, et un diaphragme 27 de régulation du débit d'oxygène dans la canalisation 23 lorsque l'électrovanne 25 est dans sa position ouverte.

Un débitmètre 29 à commande manuelle est disposé en dérivation par rapport à l'électrovanne 25 et au diaphragme 27 dans la canalisation 23 d'alimentation en oxygène. Ce débitmètre 29 à commande manuelle sert de vanne de secours en cas d'une défaillance de l'électrovanne 25 et, comme cela sera expliqué plus loin, à l'étalonnage de l'appareil 1.

En outre, l'appareil 1 comprend deux capteurs 31 et 33 de mesure de la teneur en oxygène de l'eau, dont l'un 31 est disposé dans la canalisation 15 pour mesurer la teneur $C_e$ en oxygène de l'eau à traiter et dont l'autre 33 est disposé près de l'ouverture 7, à la sortie de la cuve 3, pour mesurer la teneur $C_s$ d'oxygène dissous dans l'eau en sortie de l'appareil.

Les deux capteurs 31 et 33 sont reliés à une unité centrale 35 comprenant des moyens 37 d'exploitation des signaux délivrés par les deux capteurs 31 et 33 et des moyens 39 de commande de l'électrovanne 25.

Les moyens 37 d'exploitation comprennent des moyens 41 de comparaison de la teneur $C_s$ avec une valeur de consigne $C_{consig.}$ mémorisée dans une mémoire 43, et des moyens 45 de calcul d'un temps d'ouverture de l'électrovanne, c'est à dire de la durée d'une période $T_i$ d'injection pendant laquelle l'électrovanne 25 est en position ouverte et l'appareil 1 est alimenté en oxygène.

Les moyens 39 de commande de l'électrovanne 25 comprennent un temporisateur 47 pour commander les temps d'ouverture et de fermeture de l'électrovanne 25 et, relié à ce temporisateur 47, une mémoire 48 d'une durée d'une période d'inhibition $T_p$ pendant laquelle, après une période $T_i$ d'injection, celle-ci est maintenue fermée.

L'unité centrale 35 est par exemple réalisée par un micro-ordinateur équipé d'interfaces adaptées pour acquérir les signaux délivrés par les capteurs 31 et 33, et pour envoyer des commandes d'ouverture ou de fermeture à l'électrovanne 25, et comportant une mémoire dans laquelle est chargé un programme informatique adapté.

La figure 2 montre un graphique illustrant le procédé de régulation de l'invention. Sur l'axe des abscisses 50 est rapporté le temps en secondes et sur celui des ordonnées 52 est rapportée la teneur $C_s$ en oxygène de l'eau en sortie de l'appareil 1. Ce graphique montre une courbe 54 de variation de $C_s$ en fonction du temps.

Selon le procédé de l'invention, on mesure au moyen du capteur 33 la teneur $C_s$ en oxygène de l'eau en sortie de l'appareil 1. Cette valeur $C_s$ mesurée est comparée dans les moyens 41 de comparaison à la valeur de consigne $C_{consig.}$ mémorisée dans la mémoire 43.

Si la teneur $C_s$ mesurée est inférieure la valeur de consigne $C_{consig.}$, comme par exemple à l'instant t = 2s sur la figure 2, on déclenche un cycle d'alimentation de l'appareil 1. Un cycle d'alimentation est composé d'une période $T_i$ d'injection de l'oxygène dans la cuve 3 pendant laquelle l'électrovanne 25 est en position ouverte, et d'une période $T_p$ d'inhibition pendant laquelle l'électrovanne 25 est en position fermée. Pour cela, les moyens 41 de comparaison envoient un signal de commande comprenant notamment la valeur $C_s$ mesurée aux moyens 45 de calcul afin que ceux-ci déterminent à partir des caractéristiques de l'appareil 1 et les mesures de $C_s$ et de $C_e$ la durée de la période $T_i$. Cette durée de la période $T_i$ est envoyée au temporisateur 47.

Pendant la période d'injection $T_i$, le temporisateur 47 maintient l'électrovanne 25 en position ouverte et de l'oxygène est injectée avec un débit $Q_i$ déterminé par la pression en aval de l'électrovanne 25 et par le diamètre du diaphragme 27. Ensuite le temporisateur 47 maintient l'électrovanne 25 en position fermée pendant la période $T_p$. La durée de la période $T_p$ correspond sensiblement à l'inertie de réponse de l'appareil à une injection d'oxygène dans l'appareil 1 et est définie par la relation suivante :

$$T_p = \frac{V_e}{Q_{H_2O}}. \qquad (1)$$

Comme on le voit sur la courbe 54 de la figure 2, lors de la période d'injection, la teneur $C_s$ diminue encore du fait de l'inertie de réponse de l'appareil et remonte ensuite lors de la période d'inhibition. A la fin de la période d'inhibition $T_p$, on dispose d'une valeur de $C_s$ qui est une réponse à la quantité d'oxygène injectée lors de la période d'injection.

Si après le cycle d'injection, c'est-à-dire après une période de cycle $T_{tot} = T_i + T_p$, $C_s$ est encore inférieure à $C_{consig.}$, les moyens 41 de comparaison déclenchent à nouveau un cycle d'injection. Comme on le voit sur la figure 2, le procédé de régulation de l'invention permet d'obtenir une variation oscillante de $C_s$ autour de $C_{consig.}$.

Par le fait que l'électrovanne 25 ne peut prendre que deux positions, la position fermée et la position ouverte, et par le procédé de régulation de l'invention, on régule de façon simple, fiable et précise la teneur $C_s$ en sortie de l'appareil 1.

La Demanderesse a constaté que le rapport entre la durée de la période $T_i$ d'injection et la durée de la période $T_p$ d'inhibition est sensiblement constant.

Afin que l'amplitude des oscillations de $C_s$ autour de $C_{consig.}$ soit faible, on détermine à partir des caractéristiques de l'appareil 1 et à partir des mesures de $C_s$ et de $C_i$ les durées des périodes $T_i$ et $T_p$ ainsi que le débit $Q_i$ avec lequel on injecte pendant la période $T_i$ de l'oxygène dans la phase gazeuse par l'intermédiaire de la canalisation 23.

L'appareil 1 est installé pour dissoudre dans l'eau une certaine quantité d'oxygène par unité de temps, c'est-à-dire un débit moyen d'oxygène $Q_{O2d}$, ce débit étant déterminé par un cahier des charges piscicoles. Pour pouvoir apporter ce débit moyen d'oxygène dissous dans l'eau $Q_{O2d}$, il faut connaître les caractéristiques de dissolution de l'appareil.

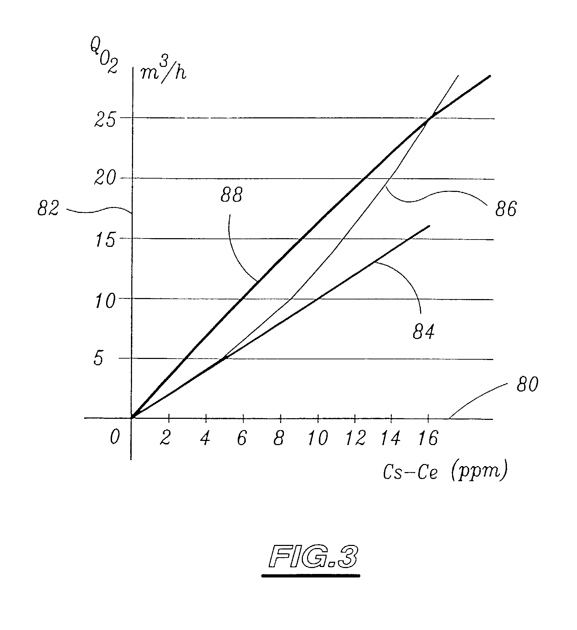

La figure 3 montre sur un graphique des courbes d'étalonnage d'un appareil 1 de dissolution d'oxygène dans l'eau.

Sur l'axe des abscisses 80 est rapportée la différence en ppm massiques (parties par million massiques) entre la teneur $C_s$ d'oxygène dissous dans l'eau en sortie de l'appareil et la teneur $C_e$ en oxygène de l'eau à traiter. Sur l'axe des ordonnées 82 est rapporté un débit moyen d'oxygène $Q_{O2}$ en m³/h. Sur le graphique sont représentées trois courbes 84, 86, et 88.

La courbe 84 montre le débit moyen d'oxygène dissous dans l'eau $Q_{O2d}$ en fonction de la différence ($C_s$-$C_e$) des teneurs en oxygène de l'eau respectivement en sortie et à l'entrée de l'appareil 1. $Q_{O2d}$ est déterminée par la relation suivante :

$$Q_{O2d} = (C_s - C_e)Q_{H_2O} \qquad (2)$$

C'est-à-dire, pour obtenir une différence ($C_s$-$C_e$) de teneurs en oxygène de l'eau respectivement à la sortie et à l'entrée de l'appareil 1 et avec un débit d'eau à traiter $Q_{H2O}$ qui est constant pour un appareil donné, il faut dissoudre le débit moyen $Q_{O2d}$. La courbe 84 est une courbe calculée pour un débit $Q_{H2O}$ donné.

Du fait notamment des gaz autres que l'oxygène qui sont dissous dans l'eau à traiter et qui se libèrent lors du traitement dans la cuve 3 de sorte qu'ils modifient la composition de la phase gazeuse de la cuve 3, $Q_{O2d}$ ne correspond pas directement au débit moyen d'oxygène $Q_m$ devant être injecté dans la phase gazeuse. Ce débit moyen d'oxygène $Q_m$ est représenté par la courbe 86 en fonction de ($C_s$-$C_e$). Il est déterminé par la relation suivante:

$$Q_m = (C_s - C_e)Q_{H_2O}\frac{1}{Rd_m} \qquad (3)$$

$Rd_m$ est le rendement réel de dissolution de l'appareil 1. La courbe 86 a été obtenue expérimentalement en maintenant l'électrovanne 25 fermée et en faisant varier le débit d'oxygène injecté dans la cuve 3 au moyen du débitmètre 29 à commande manuelle tout en mesurant $C_s$ et $C_e$.

Pour par exemple un écart maximal ($C_s$ - $C_e$) de 16 ppm prévu par le cahier de charges piscicoles, il faut dissoudre en moyenne environ 16 m³/h d'oxygène dans l'eau (voir courbe 84), mais injecter en moyenne 25 m³/h d'oxygène dans la cuve 3 (voir courbe 86). A partir de ces courbes 84 et 86, on détermine le rendement réel $Rd_m$ de dissolution de l'appareil 1, défini alors par la relation suivante:

$$Rd_m = \frac{Q_{O_2 d}}{Q_m} \qquad (4)$$

La courbe 88 est le débit moyen d'oxygène $Q_{O2E}$ demandé à la régulation de l'électrovanne 25. L'électrovanne 25 et le diamètre du diaphragme 27 sont alors choisis de telle manière qu'on obtiennent $Q_m$ pour un écart maximal $(C_s - C_e)$ de 16 ppm prévu par le cahier de charges piscicoles. Pour ce point de fonctionnement $Q_{O2E}$ et $Q_m$ sont alors égaux.

Généralement, on choisira l'électrovanne 25 et le diamètre du diaphragme 27 de telle sorte que la courbe 88 soit assez proche de la courbe 86 pour obtenir un bon résultat de régulation.

A partir de ces caractéristiques de l'appareil 1, on détermine les durées $T_{tot}$, $T_i$, $T_p$ et le débit d'oxygène $Q_i$ avec lequel on injecte de l'oxygène dans l'appareil 1 par l'intermédiaire de la canalisation 23.

Pour injecter en moyenne une quantité d'oxygène suffisante, $T_i$, $T_p$ ainsi que $Q_m$ et $Q_i$ vérifient la relation suivante :

$$T_i Q_i = (T_i + Tp)Q_m \qquad (5)$$

Cette relation signifie que la quantité d'oxygène $T_i Q_i$ injectée pendant la période $T_i$ correspond à la quantité moyenne $(T_i + T_p)Q_m$ devant être injectée dans la cuve 3 pour obtenir l'augmentation de la teneur en oxygène requise.

Par ailleurs, l'injection de la quantité d'oxygène $T_i Q_i$ dans le volume $V_g$ de la phase gazeuse conduira à une augmentation $\Delta C'$ de la teneur en oxygène de la phase gazeuse donnée par la relation suivante :

$$\Delta C' = \frac{Q_i T_i}{V_g} \qquad (6)$$

Cette augmentation $\Delta C'$ doit être assez importante pour entraîner une augmentation de la teneur en oxygène de l'eau en sortie de l'appareil. On peut alors exprimer $\Delta C'$ par la relation suivante :

$$\Delta C' = \frac{(C_{consig.} - C_s)}{E} \qquad (7)$$

où E est le coefficient théorique de rendement de dissolution de l'oxygène dans l'eau, donné par la relation suivante :

$$E = \frac{k_l a \tau}{1 - k_l a \tau} \qquad (8)$$

$k_l$ étant un coefficient de transfert de matière dans le film liquide, $\underline{a}$ l'aire spécifique interfaciale liquide et $\tau$ le temps de passage de la phase liquide dans la cuve 3. Pour plus de détails sur ce coefficient E, on consultera par exemple la thèse soutenue le 18 mai 1978 à l'Université Paul Sabatier de Toulouse par Michel Roustant, Ingénieur INSA ayant pour titre « Contribution à l'étude de phénomènes d'agitation et de transfert de matière dans des réactions gaz-liquide ».

En combinant les relations (3), (5), (6) et (7), on obtient les relations suivantes pour $Q_i$, $T_i + T_p = T_{tot}$, et $T_i$ :

$$Q_i = \frac{Q_{H_2 O} V_g (C_s - C_e)(C_{consig.} - C_s)}{Rd_m V_g (C_{consig.} - C_s) - V_e E (C_s - C_e)} \qquad (9)$$

$$T_{tot} = \frac{(C_{consig.} - C_s) V_g Rd_m}{Q_{H_2 O}(C_s - C_e)E} \qquad (10)$$

$$T_i = T_{tot} - T_p \qquad (11).$$

Ainsi, tous les paramètres pour la régulation nécessaires pour mettre en oeuvre le procédé de l'invention sont définis. Le procédé se distingue par sa simplicité et par le fait qu'il ne nécessite comme organe de régulation dans la canalisation d'alimentation en oxygène qu'une vanne « tout ou rien ».

**Revendications**

1. Procédé de régulation de la teneur en oxygène de l'eau en sortie d'un appareil (1) de dissolution d'oxygène dans l'eau, destiné notamment à la pisciculture, dans lequel

   - on mesure au moyen d'un capteur (33) la teneur $C_s$ en oxygène de l'eau en sortie de l'appareil (1), et
   - on compare la teneur $C_s$ mesurée en sortie de l'appareil à une valeur de consigne $C_{consig.}$,

   caractérisé en ce que

   si la teneur $C_s$ mesurée est inférieure la valeur de consigne $C_{consig.}$, on déclenche un cycle d'alimentation en oxygène dudit appareil, un cycle d'alimentation étant composé d'une période $T_i$ d'injection de l'oxygène dans l'appareil pendant laquelle une vanne (25) de régulation du débit d'oxygène alimentant ledit appareil est en position ouverte, et d'une période $T_p$ d'inhibition pendant laquelle ladite vanne est en position fermée, ladite période d'inhibition correspondant sensiblement à l'inertie de réponse de l'appareil à une injection d'oxygène.

2. Procédé selon la revendication 1, caractérisé en ce que le rapport entre la durée de la période $T_i$ d'injection et la durée de la période $T_p$ d'inhibition est sensiblement constant.

3. Procédé selon la revendication 1 ou 2, pour un appareil de dissolution d'oxygène contenant un volume d'eau $V_e$ et ayant un débit nominal d'eau traitée $Q_{H2O}$, caractérisé en ce que la période $T_p$ d'inhibition est sensiblement définie par la relation :

$$T_p = \frac{V_e}{Q_{H_2O}}.$$

4. Procédé selon l'une quelconque des revendications 1 à 3, caractérisé en ce qu'on mesure également la teneur $C_e$ d'oxygène de l'eau à l'entrée de l'appareil, et en ce que la durée totale $T_{tot}$ d'un cycle d'alimentation est sensiblement définie par la relation suivante :

$$T_{tot} = \frac{(C_{consig.} - C_s)\, V_g Rd_m}{Q_{H_2O}(C_s - C_e)E}$$

où $V_g$ est le volume de la phase gazeuse contenue dans l'appareil, $Rd_m$ est le rendement réel de dissolution de l'appareil et E est le coefficient théorique de rendement de dissolution de l'oxygène.

5. Procédé selon la revendication 4, caractérisé en ce que lors de la période $T_i$, on injecte de l'oxygène avec un débit $Q_i$ défini sensiblement par la relation suivante :

$$Q_i = \frac{Q_{H_2O}\, V_g (C_s - C_e)(C_{consig.} - C_s)}{Rd_m V_g (C_{consig.} - C_s) - V_e E(C_s - C_e)}.$$

6. Appareil de dissolution d'oxygène dans l'eau comprenant une cuve (3) d'oxygénation reliée à une source (22) d'oxygène par l'intermédiaire d'une canalisation (23) d'alimentation, caractérisé en ce qu'il comprend une électrovanne (25) tout ou rien pouvant prendre soit une position fermée, soit une position ouverte, qui est disposée dans la canalisation (23) d'alimentation, un capteur (31) de mesure de la teneur $C_e$ en oxygène de l'eau à traiter ainsi qu'un capteur (33) de mesure de la teneur $C_s$ d'oxygène dissous dans l'eau en sortie de l'appareil, et une unité centrale (35) comprenant des moyens (37) d'exploitation des signaux délivrés par les deux capteurs (31,33) de mesure ainsi que des moyens (39) de commande de l'électrovanne (25) pilotés par les moyens (37) d'exploitation.

7. Appareil selon la revendication 6, caractérisé en ce que les moyens (37) d'exploitation comprennent des moyens (41) de comparaison de la teneur $C_s$ avec la valeur de consigne $C_{consig.}$ mémorisée dans une mémoire (43) et des moyens (45) de calcul de la durée de la période $T_i$ d'injection.

8. Appareil selon la revendication 6 ou 7, caractérisé en ce que les moyens (39) de commande de l'électrovanne (25) comprennent une mémoire (48) de la durée de la période d'inhibition $T_p$ et, reliée à cette mémoire (48) ainsi qu'aux moyens (45) de calcul, un temporisateur (47) pour commander les temps d'ouverture et de fermeture de l'électrovanne (25).

_FIG.1_

_FIG.2_

FIG.3

**Office européen des brevets**

**RAPPORT DE RECHERCHE EUROPEENNE**

Numéro de la demande

EP 98 40 0988

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | FR 2 352 752 A (AIR LIQUIDE) 23 décembre 1977<br>* page 45, ligne 11 – page 58, ligne 24 * | 1,6 | G05D21/02<br>A01K63/04 |
| A | WO 86 03734 A (COMMW SCIENT IND RES ORG) 3 juillet 1986<br>* le document en entier * | 1,6 | |
| A | US 4 818 408 A (HAMAMOTO YOUICHI) 4 avril 1989<br>* le document en entier * | 1,6 | |
| A | EP 0 292 374 A (DEGREMONT) 23 novembre 1988<br>* le document en entier * | 1,6 | |
| P,A | EP 0 796 556 A (AIR LIQUIDE) 24 septembre 1997<br>* le document en entier * | 1,6 | |
| A | EP 0 645 080 A (BATTIGELLI GIUSEPPE ;BATTIGELLI LUCILLA (IT)) 29 mars 1995<br>* le document en entier * | 1,6 | DOMAINES TECHNIQUES RECHERCHES (Int.Cl.6)<br>G05D<br>A01K |

Le présent rapport a été établi pour toutes les revendications

| Lieu de la recherche | Date d'achèvement de la recherche | Examinateur |
|---|---|---|
| LA HAYE | 12 août 1998 | Kelperis, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

9